# EUROPÄISCHE PATENTSCHRIFT

(11) **EP 0 463 627 B1**
(45) Veröffentlichungstag und Bekanntmachung des Hinweises auf die Patenterteilung: **10.05.1995**
(21) Anmeldenummer: 91110744.9
(22) Anmeldetag: 28.06.1991
(51) Int. Cl.: B01D 71/36

(54) **Hydrophilierte, mikroporöse Membran aus Polytetrafluorethylen und Verfahren zu ihrer Herstellung**
Hydrophylized microporous polytetrafluorethylene membrane and production process thereof
Membrane microporeuse et hydrophilisée en polytétrafluoréthylène et procédé pour la fabriquer

(30) Priorität: 29.06.1990 DD 342303; 29.06.1990 DD 342304; 29.06.1990 DD 342300
(43) Veröffentlichungstag der Anmeldung: 02.01.1992
(73) Patentinhaber: Gore Enterprise Holdings, Inc., Newark, DE 19711 (US)
(72) Erfinder: Brink, Hans-Jürgen, Dr., O-8122 Radebeul (DE); Kölling, Hartmuth, Dr., O-4500 Dessau (DE); Lunkwitz, Klaus, Dr., O-8027 Dresden (DE); Klatt, Bruno, Dr., O-4440 Wolfen 3 (DE); Horx, Manfred, O-4440 Wolfen 3 (DE); Herrmann, Reimund, O-8122 Radebeul (DE); Bürger, Wolfgang, Dr., O-8036 Dresden (DE)
(74) Vertreter: Kador & Partner

(56) Entgegenhaltungen:
- EP-A- 0 369 466
- EP-A- 0 430 082
- FR-A- 2 250 793
- US-A- 3 170 858
- PATENT ABSTRACTS OF JAPAN Bnd. 11, Nr. 96 (C-412)(2543) 26. März 1987 & JP-A-61 249 501 (SUMITO ELECTRIC IND LTD) 6 November 1986

## Beschreibung

Die Erfindung betrifft eine hydrophilierte, mikroporöse Membran aus Polytetrafluorethylen für Fest-flüssig-, Flüssig-flüssig-, Flüssig-gasförmig- und Gasförmig-gasförmig-Trennprozesse, beispielsweise für Mikrofiltration, Umkehrosmose, Dialyse, Elektrodialyse und Gastrennung. Die Erfindung betrifft weiterhin Verfahren zur Herstellung der Membranen.

Membranen für die Mikrofiltration, Umkehrosmose, Dialyse, Elektrodialyse und Gastrennung, die mit wässrigen oder organischen Medien beaufschlagt werden und deshalb wegen der chemischen und/oder thermischen Beständigkeit aus PTFE hergestellt werden, besitzen den Nachteil, daß sie nur schlecht benetzbar sind. Die für PTFE charakteristische hohe Hydrophobie und Oleophobie kann durch geeignete Zusätze oder Behandlung des PTFE gemindert werden.

Es ist bekannt, poröses Material aus PTFE durch Expandieren des Materials herzustellen. Diese Membranen können durch Zusätze nur begrenzt hydrophiliert werden, da entsprechende Beimischungen den Strukturbildungsvorgang stören würden.

Weiterhin sind poröse PTFE-Membranen bekannt, bei denen durch ionisierende Strahlung Polymerisationsreaktionen induziert und damit Acrylsäure, Maleinsäureanhydrid und Styren aufgepfropft worden sind. Die Pfropfung ist jedoch sehr ungleichmäßig und nicht genügend bestätigt. Bei der Anwendung von ionisierender Strahlung wird das PTFE selbst durch sehr kleine Strahlendosen stark versprödet, wodurch Festigkeit und Flexibilität beeinträchtigt werden. Die US-A-3170858 beschreibt ein Verfahren, bei dem durch ionisierende Strahlung TFE-Monomere auf PTFE- Polymere aufpolymerisiert werden.

Es ist auch bekannt, daß mikroporöse PTFE-Membranen anorganische Hydrophilierungsmittel, wie Titandioxid, Bariumtitanat, Zirkondioxid, Magnesiumoxid oder -hydroxid, Siliziumdioxid, Aluminiumoxid u. a. enthalten können. Diese Hydrophilierungsmittel sind kompliziert und kostenaufwendig auf- oder einzubringen und setzen die mechanische und/oder chemische Beständigkeit der mikroporösen Membran herab bzw. vermindern wegen der erforderlichen hohen Konzentration die Festigkeit und Flexibilität der Membran erheblich.

Es ist bekannt, daß PTFE vom Emulsionstyp durch Extrudieren oder Walzen bzw. Kalandrieren zu mikroporösen Membranen verarbeitet werden kann. Dabei wird von trockenen Komponenten oder von wäßrigen Dispersionen ausgegangen. Das Walzen von mikroporösen Membranen aus PTFE erfolgt in mehreren, oft zahlreichen und voneinander getrennten Durchgängen, zwischen denen eine Reorientierung der Walzrichtung um 90 ° vorgenommen wird. Dieser Arbeitsgang kann mit einem Zerschneiden oder Falten des Walzfelles verbunden sein. Beim Walzen von mikroporösen Membranen sind zahlreiche Reorientierungsvorgänge erforderlich, um eine ausreichende Festigkeit in biaxialer Richtung zu gewährleisten.

Die Lösungen nach dem Stand der Technik beschränken sich auf die Verwendung von PTFE-Emulsionspolymerisat, da nur das beim Walzprozeß hinreichend plastisch verformbar ist und so die Flächenbildung ermöglicht wird. PTFE-Suspensionspolymerisat wird üblicherweise nur zur Preßverarbeitung bei der Formkörperherstellung angewendet und ist wegen seiner filzig/faserigen Beschaffenheit und seiner geringen plastischen Verformbarkeit für die Verarbeitung durch Walzen nicht geeignet.

Es ist weiterhin bekannt, feinteiliges Fluorpolymerisat zusammen mit einem herauslösbaren Porenbildner und gegebenenfalls unter Zusatz eines Hydrophilierungsmittels unter Wärmeeinwirkung zu einem plattenförmigen Material zu verpressen (Drucksinterung). Die Fremdstoffe zur Hydrophilierung der polymeren Matrix erhöhen jedoch den Verarbeitungsaufwand. Sie unterscheiden sich in ihren physikalisch-chemischen Eigenschaften wesentlich von PTFE und vermindern wegen ihrer erforderlichen hohen Konzentration die Festigkeit und Flexibilität der Membran erheblich.

Der Erfindung liegt die Aufgabe zugrunde, eine hydrophilierte, mikroporöse Membran aus PTFE zu schaffen, deren Struktur ohne Zusatz von Fremdstoffen bzw. ohne Bestrahlung der fertigen Membran oder der polymeren Hauptkomponente der Matrix herstellbar ist. Aufgabe der Erfindung ist es weiterhin, eine mikroporöse Membran nach einer vereinfachten Walztechnologie oder einer Preßtechnologie herzustellen.

Erfindungsgemäß wird die Aufgabe dadurch gelöst, daß die hydrophilierte, mikroporöse Membran aus einem unmodifizierten PTFE und 2,5 bis 25 Masse-% (bezogen auf die Matrix) strahlenchemisch modifiziertem PTFE als weitgehend polymeridentischem Hydrophilierungsmittel besteht.

Die erfindungsgemäße Membran kann vorteilhafterweise auch aus einer hydrophilierten Membran und einer hydrophoben Trägermembran bestehen.

Das unmodifizierte PTFE kann ein Suspensions- oder ein Emulsionspolymerisat oder eine Mischung von beiden im Verhältnis 10 : 1 bis 1 : 10 sein.

Als hochfunktionalisiertes PTFE wird ein durch Bestrahlung von unmodifiziertem PTFE, vorzugsweise von Emulsionspolymerisat, gewonnenes Produkt verwendet. Die Bestrahlung wird mit einer Elektronenstrahlung einer Elektronenenergie von 0,5 bis 2 MeV an der Luft bis zu einer absorbierten Dosis von 2000 bis 6000 KGy durchgeführt. Das unmodifizierte PTFE kann vor der Bestrahlung mit 5 bis 40 Masse-% (bezogen auf das eingesetzte PTFE) Ammonium- oder Alkalisulfiten, -disulfiten, -hydrogensulfiten, -carbonaten, -hydrogencarbonaten oder Bisulfitaddukten von Carbonylverbindungen oder eines Gemisches dieser Substanzen gemischt werden. Eine besondere Ausführungsform der Erfindung ist ein weiterer Zusatz von 1 bis 12 Masse-% Alkalifluoriden.

Die Porosität der erfindungsgemäßen Membran liegt im Bereich von 10 bis 95 %. Als Porenbildner wird ein herauslösbarer, feinteiliger Feststoff, vorzugsweise NaCl, im Volumenverhältnis 1 : 10 bis 5 : 1 verwendet. Das weitgehend polymeridentische Hydrophilierungsmittel, welches auch in geringen Konzentrationen hochwirksam ist, verbessert die Benetzbarkeit der PTFE-Membranmatrix gegenüber organischen Lösungsmitteln und ermöglicht die Verbundbildung mit einer hydrophoben und oleophoben Trägermembran. Die PTFE-Membran hat keinerlei Einsatzbeschränkungen.

Die erfindungsgemäße Membran kann hergestellt werden, indem vorzerkleinertes PTFE-Suspensionspolymerisat mit PTFE-Emulsionspolymerisat im Masseverhältnis 1 : 5 bis 3 : 1 trocken intensiv gemischt und mit einem feinteiligen, herauslösbaren Porenbildner versetzt und diese Mischung auf einem Zweiwalzenstuhl ohne Umorientierung der Walzrichtung auf die gewünschte Enddicke von 0,05 bis 2 mm gewalzt wird.

Der Mischung aus dem Suspensions- und dem Emulsionspolymerisat kann 1,5 bis 25 Masse-% (bezogen auf das PTFE-Rohpolymerisat) hochfunktionalisiertes PTFE zugesetzt werden.

Weiterhin kann die Mischung mit einem Gleitmittel geknetet werden. Als Gleitmittel kann ein gesättigter Kohlenwasserstoff oder ein Gemisch gesättigter Kohlenwasserstoffe mit einem Siedepunkt bzw. Siedebereich zwischen 200 und 300 °C in einem Anteil von 10 bis 50 Masse-% (bezogen auf die trockene Mischung) verwendet werden.

Die erhaltene plastische Masse wird auf dem Zweiwalzenstuhl mit Walzentemperaturen von 50 bis 200 °C bei einer Friktion von 1,1 bis 1,6 und einer Verringerung des Walzenspaltes in Schritten von 0,1 bis 0,4 mm auf das Zwei- bis Dreifache der Enddicke und danach sofort in einem Schritt auf die gewünschte Enddicke von 0,05 bis 2 mm ausgewalzt. Nach dem Walzen wird das Gleitmittel entfernt. Vorteilhaft ist es, die so erhaltene mikroporöse Membran unmittelbar vor ihrem Einsatz in Membranprozessen mit einem Netzmittel, z. B. Ethanol, Aceton oder Wasser unter Zusatz einer oberflächenaktiven Substanz zu benetzen.

Das erfindungsgemäße Verfahren gestattet es, auf die bei der ausschließlichen Anwendung von PTFE-Emulsionspolymerisat notwendige, fertigungstechnisch sehr aufwendige Reorientierung der Walzrichtung zu verzichten.

Die hydrophilierten mikroporösen Membranen können auch hergestellt werden, indem das PTFE-Rohpolymerisat und das hochfunktionalisierte PTFE mit einem feinteiligen Porenbildner im Volumenverhältnis 1 : 10 bis 5 : 1 intensiv trocken vermischt, die Mischung mit einer leichtflüchtigen Flüssigkeit der Dichte 1,3 bis 2,4 g/cm³ bei hohem Energieeintrag dispergiert und auf eine waagerecht einnivellierte Form ausgegossen wird. Die organische Flüssigkeit wird durch Verdunstungstrocknung entferntund die entstandene vorgeformte Schicht bei dem genannten Druck in der Form kalt zu verpressen und der Form zu entnehmen. Anschließend wird bei einem Spalt von 0,5 bis 5 mm zwischen der Schichtoberseite und der oberen Preßplatte aufgeheizt und nach dem Erreichen der Sintertemperatur von 320 bis 380 °C 5 bis 50 min verpreßt. Dabei können Aluminiumfolien als Trennschichten zwischen der vorgeformten Schicht und den Preßplatten verwendet werden. Als leichtflüchtige Flüssigkeit wird ein halogenierter Kohlenwasserstoff, vorzugsweise Dibromtetrafluorethan, verwendet.

Das erfindungsgemäße Verfahren gestattet es, aus trockenen Ausgangsstoffen Membranen mit gleichmäßiger Struktur sowohl über die Dicke als auch über die Fläche herzustellen.

Bei dem Verfahren kann anstelle des bisher eingesetzten hochwertigen PTFE-Emulsionspolymerisat das billigere Suspensionspolymerisat als Hauptkomponente verwendet werden.

Nachstehend soll die Erfindung an Hand von Beispielen näher erläutert werden:

### Beispiel 1

165 g PTFE-Rohpolymerisat vom Suspensionstyp (Hersteller UdSSR, Typ Ftoroplast 4 B) und 25 g PTFE-Rohpolymerisat vom Emulsionstyp werden in einer Schlagrad-Messermühle 30 s lang zerkleinert. Diese Mischung wird zusammen mit 290 g feinstgemahlenem NaCl und 25 g hochfunktionalisiertem PTFE in einem Schnellmischer zweimal mit einer kurzen Pause über eine Zeit von 30 s gemeinsam vermischt.

Das Ausgangsmaterial für das hochfunktionalisierte PTFE ist Emulsionspolymerisat (Ftoroplast 4 D), das zunächst durch Elektronenstrahlung mit einer Elektronenenergie von 1 MeV und mit einer Dosis von 300 kGy pulverisiert wird. Danach wird es mit 25 Masseanteile-% (bezogen auf das PTFE) feindispersem, getrocknetem (NH₄)₂SO₃.H₂O in guter Durchmischung bei einer Elektronenenergie von 1 MeV bei einer Temperatur von 180 °C mit einer Dosis von 2800 kGy bestrahlt und mit einem Aceton/Wassergemisch (1 : 1) durch Auswaschen von überschüssigem Ammoniumsulfit befreit und getrocknet.

Das Gemisch aus PTFE-Suspensionspolymerisat, PTFE-Emulsionspolymerisat, hochfunktionalisiertem PTFE und NaCl wird mit 1,5 l C₂F₄Br₂ versetzt und viermal kurz hintereinander 10 s lang mit einem schnelllaufenden Rührer dispergiert. Diese nicht agglomerierende Dispersion wird in eine waagerecht einnivellierte Form der Kantenlänge 500 mm x 500 mm gegossen und bei Umgebungstemperaturen getrocknet. Die so entstandene gleichmäßig dicke vorgeformte Schicht wird in der Form bei 10 MPa kalt verpreßt, der Form entnommen und mit Zwischenlagen aus Aluminiumfolie zwischen den Preßplatten einer hydraulischen Presse aufgeheizt, wobei der Spalt zwischen der Schicht und der oberen Preßplatte 3 mm beträgt. Nach Erreichen der Sintertemperatur von 350 °C wird bei einem Preßdruck von 5 MPa (bezogen auf die Fläche der Schicht) über eine Zeit von 50 min gepreßt und gesintert.

Nach dem Abkühlen werden das NaCl im Wasserbad herausgelöst und die Membran getrocknet. Sie hat eine Dicke von 1 mm, eine Gesamtporosität von etwa 60 % mit einer Porengrößenverteilung von 90 % = 3,5 »m, 50 % = 1,5 »m und 10 % = 0,65 »m (Messung mit Quecksilberporosimeter).

### Beispiel 2

170 g PTFE-Rohpolymerisat vom Suspensionstyp (Ftoroplast 4 B) wird mit einer Schlagrad-Messermühle 45 s lang zerkleinert, danach mit 5 g hochfunktionalisiertem PTFE und 260 g feinstgemahlenem NaCl zusammen in einen Schnellmischer gegeben und zweimal hintereinander mit einer kurzen zwischengeschalteten Pause über ein Zeit von 45 s gemeinsam vermischt.

Das Ausgangsmaterial für das hochfunktionalisierte PTFE ist Emulsionspolymerisat (Ftoroplast 4 D), das zunächst durch Elektronenstrahlung mit einer Elektronenenergie von 1,5 MeV und mit einer Dosis von 200 kGy pulverisiert wird. Danach wird es mit 15 Masseanteile in % (bezogen auf das PTFE) feindispersem Na₂SO₃ und 5 % feindispersem NaF in guter Durchmischung bei einer Elektronenenergie von 1,5 MeV und einer Temperatur von 200 °C mit einer Dosis von 2000 kGy bestrahlt und mit Aceton/Wasser (Verhältnis 1 : 1) durch Auswaschen von den überschüssigen Zusätzen befreit und getrocknet.

Das Gemisch aus PTFE-Suspensionspolymerisat, hochfunktionalisiertem PTFE und NaCl wird mit 1,5 l C₂F₄Br₂ versetzt und viermal 10 s lang mit einem schnellaufenden Rührer dispergiert.

Diese nicht agglomerierende Dispersion wird in eine waagerecht einnivellierte Form der Kantenlänge 500 mm x 500 mm gegossen und bei Umgebungstemperatur getrocknet. Die so entstandene gleichmäßig dicke vorgeformte Schicht wird in der Form bei 10 MPa kalt verpreßt, der Form entnommen und mit Zwischenlagen aus Aluminiumfolie zwischen den Preßplatten einer hydraulischen Presse aufgeheizt, wobei der Spalt zwischen der Schicht und der oberen Preßplatte 5 mm beträgt. Nach Erreichen der Sintertemperatur von 360 °C wird bei einem Preßdruck von 8 MPa (bezogen auf die Fläche der Schicht) über eine Zeit von 30 min gepreßt und gesintert.

Nach dem Abkühlen werden das NaCl im Wasserbad herausgelöst und die Membran getrocknet. Sie hat eine Dicke von 0,9 mm, eine Gesamtporosität von etwa 60 % mit einer Porengrößenverteilung von 90 % = 4,5 »m, 50 % = 1,7 »m und 10 % = 0,7 »m (Messung mit Quecksilberporosimeter).

### Beispiel 3

35 g PTFE-Rohpolymerisat vom Suspensionstyp (Ftoroplast 4 B) und 17,5 g PTFE-Rohpolymerisat vom Emulsionstyp werden in einer Schlagrad-Messermühle 30 s zerkleinert. Diese Mischung wird mit 308 g feinstgemahlenem NaCl und 17,5 g hochfunktionalisiertem PTFE in einem Schnellmischer zweimal mit einer kurzen zwischengeschalteten Pause über eine Zeit von 20 s gemeinsam vermischt.

Das Ausgangsmaterial für das hochfunktionalisierte PTFE ist Emulsionspolymerisat (Ftoroplast 4 D), das durch Elektronenstrahlung einer Elektronenenergie von 2 MeV mit einer Dosis von 2000 kGy bestrahlt wird.

Das Gemisch aus PTFE-Suspensionspolymerisat, -Emulsionspolymerisat, hochfunktionalisiertem PTFE und NaCl wird mit 1,2 C₂F₄Br₂ versetzt und viermal 5 s lang mit einem schnellaufenden Rührer dispergiert. Diese nicht agglomerierende Dispersion wird in eine waagerecht einnivellierte Form der Kantenlänge 500 mm x 500 mm gegossen und bei Umgebungstemperatur getrocknet. Diese so entstandene gleichmäßig dicke vorgeformte Schicht wird in der Form bei 5 MPa kalt verpreßt, der Form entnommen und mit Zwischenlagen aus Aluminiumfolie zwischen den Preßplatten einer hydraulischen Presse aufgeheizt, wobei der Spalt zwischen der Schicht und der oberen Preßplatte 2 mm beträgt. Nach Erreichen der Sintertemperatur von 330 °C wird bei einem Preßdruck von 3 MPa über eine Zeit von 40 min gepreßt und gesintert.

Nach dem Abkühlen werden das NaCl im Wasserbad herausgelöst und die Membran getrocknet. Sie hat eine Dicke von 0,7 mm, eine Gesamtporosität von ca. 80 % mit einer Porengrößenverteilung von 90 % = 10 »m, 50 % = 2 »m und 10 % = 0,9 »m (Messung mit Quecksilberporosimeter).

### Beispiel 4

15 g PTFE-Rohpolymerisat vom Suspensionstyp (Hersteller UdSSR, Typ Ftoroplast 4 B), das zuvor in einer Schlagradmühle in einer größeren Menge 30 s lang zerkleinert wird, wird mit 60 g PTFE-Rohpolymerisat vom Emulsionstyp (Ftoroplast 4 D) und 425 g feinstgemahlenem NaCl in einen Schnellmischer gegeben und 20 s gemeinsam durchmischt.

Dieses Gemisch wird mit 200 g Paraffin (Siedebereich 200 bis 250 °C) versetzt und geknetet, bis die Mischung gleichmäßig benetzt ist.

Diese plastische Masse wird auf eine Dicke von 6 mm verpreßt und auf einen Walzenstuhl gegeben, dessen Walzen auf 100 °C temperiert und mit einer Friktion von 1,6 bei einer Umfangsgeschwindigkeit der langsamen Walze von 4,0 m/min betrieben werden. Der Walzspalt wird zum Vorwalzen von 6 mm auf 0,6 mm in Stufen von 0,2 mm pro Durchlauf verstellt und im letzten Durchgang zum Fertigwalzen von 0,6 mm auf 0,2 mm reduziert. Nach dem Extrahieren des Paraffins durch Toluol und anschließender Trocknung wird die Membran bei 370 °C 10 min lang gesintert.

Das NaCl wird mittels Wasser herausgelöst. Die getrocknete Membran kann vor dem Einsatz durch Ethanol benetzt werden. Die Membran hat eine Porosität von 92 %.

Die Zugfestigkeit in Walzrichtung beträgt 8,2 MPa und quer dazu 5,3 MPa.

### Beispiel 5

75 g PTFE-Rohpolymerisat vom Suspensionstyp (Ftoroplast 4 B), das zuvor in einer Schlagrad-Messermühle 30 s zerkleinert wurde, wird mit 75 g PTFE-Rohpolymerisat vom Emulsionstyp (Ftoroplast 4 D) und 350 g feinstgemahlenem NaCl in einen Schnellmischer gegeben und 30 s gemeinsam durchmischt. Dieses Gemisch wird mit 220 g Paraffin (Siedebereich 200 bis 250 °C) versetzt und geknetet bis die Mischung gleichmäßig benetzt ist. Diese plastische Masse wird auf eine Dicke von 7 mm verpreßt und auf einen Walzenstuhl gegeben, dessen Walzen auf 120 °C temperiert und mit einer Friktion von 1,2 bei einer Umfangsgeschwindigkeit der langsameren Walze von 3,3 m/min betrieben werden.

Der Walzspalt wird zum Vorwalzen von 6 mm auf 1,8 mm in Stufen von 0,3 mm pro Durchlauf verstellt und im letzten Durchlauf zum Fertigwalzen von 1,8 mm auf 0,9 mm reduziert.

Nach dem Extrahieren des Paraffins und anschließender Trocknung wird die Membran bei 370 °C 15 min lang gesintert. Das NaCl wird mittels Wasser herausgelöst. Die Membran hat eine Porosität von 85 %.

Die Zugfestigkeit beträgt in Walzrichtung 10,1 MPa und im rechten Winkel dazu 8,1 MPa.

### Beispiel 6

70 g PTFE-Rohpolymerisat vom Suspensionstyp (Ftoroplast 4 B), das zuvor in einer Schlagrad-Messermühle 30 s lang zerkleinert wurde, wird mit 210 g PTFE-Rohpolymerisat vom Emulsionstyp (Ftoroplast 4 D), 20 g hochfunktionalisiertem PTFE und 200 g feinstgemahlenem NaCl in einen Schnellmischer gegeben und 45 s gemeinsam durchmischt.

Das Ausgangsprodukt für das hochfunktionalisierte PTFE ist Emulsionspolymerisat (Ftoroplast 4 D), das zunächst durch Elektronenstrahlung einer Elektronenenergie von 1 MeV mit einer Dosis von 300 kGy pulverisiert wird. Danach wird es mit 20 % (Massekonzentration, bezogen auf das PTFE) feindispersem, getrockneten (NH₄)₂SO₃.H₂O in guter Durchmischung bei einer Elektronenenergie von 1 MeV bei einer Temperatur von 180 °C mit einer Dosis von 2800 kGy bestrahlt und mit Aceton/Wasser-Gemisch (1 : 1) durch Auswaschen von überschüssigem Ammoniumsulfit befreit und getrocknet.

Dieses Gemisch wir mit 240 g Paraffin (Siedebereich 200 bis 250 °C) versetzt und geknetet, bis die Mischung gleichmäßig benetzt ist.

Diese plastische Masse wird auf eine Dicke von 8 mm verpreßt und auf einen Walzenstuhl gegeben, dessen beide Walzen auf 150 °C temperiert und mit einer Friktion von 1,4 bei einer Umfangsgeschwindigkeit der langsameren Walze von 3,8 m/min betrieben werden. Der Walzspalt wird zum Vorwalzen von 6 mm auf 2,1 mm in Stufen von 0,3 mm pro Durchlauf verstellt und im letzten Durchlauf zum Fertigwalzen von 2,1 mm auf 0,7 mm reduziert.

Das Paraffin wird anschließend mittels Aceton extrahiert. Nach vorheriger Trocknung erfolgt das Sintern der Membran bei 360 °C über eine Zeit von 15 min. Mittels Wasser wird das NaCl herausgelöst. Die Membran hat eine Porosität von 60 %.

Die Zugfestigkeit beträgt in Walzrichtung 8,5 MPa, im rechten Winkel dazu 6,4 MPa.

## Patentansprüche

1. Hydrophilierte, mikroporöse Membran, bestehend aus Polytetrafluorethylen und einem Hydrophilierungsmittel, dadurch gekennzeichnet, daß die Membran ausgehend von einer Mischung aus unmodifiziertem PTFE und 2,5 bis 25 Masse-% (bezogen auf die Matrix) strahlenchemisch modifiziertem PTFE als weitgehend polymeridentischem Hydrophilierungsmittel ohne Propfpolymerisation gebildet ist und gegebenenfalls Bestandteil einer aus einer hydrophoben Trägermembran und einer hydrophilierten Membran bestehenden Kompositmembran ist.

2. Hydrophilierte, mikroporöse Membran nach Anspruch 1, dadurch gekennzeichnet, daß das unmodifizierte PTFE ein Suspensionspolymerisat ist.

3. Hydrophilierte, mikroporöse Membran nach Anspruch 1, dadurch gekennzeichnet, daß das unmodifizierte PTFE ein Emulsionspolymerisat ist.

4. Hydrophilierte, mikroporöse Membran nach Anspruch 1, dadurch gekennzeichnet, daß das unmodifizierte PTFE eine Mischung von. PTFE-Suspensionspolymerisat und -Emulsionspolymerisat im Verhältnis 10 : 1 bis 1 : 10 ist.

5. Hydrophilierte, mikroporöse Membran nach einem der Ansprüche 1 bis 4 dadurch gekennzeichnet, daß das strahlenchemisch modifizierte PTFE durch Bestrahlung von unmodifiziertem PTFE, vorzugsweise Emulsionspolymerisat, durch Elektronenstrahlung mit einer Elektronenenergie von 0,5 bis 2 MeV an der Luft bis zu einer absorbierten Dosis von 2000 bis 6000 kGy erhalten wird.

6. Hydrophilierte, mikroporöse Membran nach Anspruch 5, dadurch gekennzeichnet, daß das unmodifizierte PTFE vor der Bestrahlung mit 5 bis 40 Masse-% (bezogen auf das eingesetzte PTFE) Ammonium- oder Alkalisulfiten, -disulfiten, -hydrogensulfiten, -carbonaten, -hydrogencarbonaten oder Bisulfitaddukten von Carbonylverbindungen oder eines Gemisches dieser Substanzen gemischt wird.

7. Hydrophilierte, mikroporöse Membran nach Anspruch 6, dadurch gekennzeichnet, daß 1 bis 12 Masse-% Alkalifluoride (bezogen auf das eingesetzte PTFE) zugesetzt werden.

8. Hydrophilierte, mikroporöse Membran nach einem der Ansprüche 1 bis 4 und einem der Ansprüche 5 bis 7,dadurch gekennzeichnet, daß die Mikroporen durch Herauslösen von feinteiligem Feststoff, vorzugsweise von NaCl, entstehen und die Porosität im Bereich von 10 bis 90 % liegt.

9. Verfahren zur Herstellung der hydrophilierten, mikroporösen Membran nach einem der Ansprüche 1 bis 4 und einem der Ansprüche 5 bis 7 und dem Anspruch 8, dadurch gekennzeichnet, daß ein trockenes Gemisch aus vorzerkleinertem PTFE-Suspensionspolymerisat, 2,5 bis 25 Masse-% (besogen auf das PTFE-Rohpolymerisat) strahlenchemisch modifiziertem PTFE und einem feinteiligen Porenbildner im Volumenverhältnis 1 : 10 bis 5 : 1 mit einer leicht flüchtigen organischen Flüssigkeit der Dichte 1,3 bis 2,4 g/cm³ bei hohem Energieeintrag dispergiert und auf eine waagerecht einnivellierte Form ausgegossen, die organische Flüssigkeit durch Verdunstungstrocknung entfert und die entstandene vorgeformte Schicht bei 320 bis 380 °C und einem Druck von 1 bis 10 MPa verpreßt und gesintert und anschließend der Porenbildner herausgelöst wird.

10. Verfahren nach Anspruch 9, dadurch gekennzeichnet, daß die vorgeformte Schicht vorerst bei dem angegebenen Druck kalt verpreßt, dann zwischen den Preßplatten bei einem Spalt von 0,5 bis 5 mm zwischen der Oberseite der vorgeformten Schicht und der oberen Preßplatte aufgeheizt und nach Erreichen der Sintertemperatur von 320 bis 380 °C 5 bis 50 min verpreßt wird.

11. Verfahren nach den Ansprüchen 9 oder 10, dadurch gekennzeichnet, daß die leichtflüchtige Flüssigkeit ein halogenierter Kohlenwasserstoff, insbesondere Dibromtetrafluorethan, ist.

12. Verfahren zur Herstellung der hydrophilierten, mikroporösen Membran nach einem der Ansprüche 1 bis 4 und einem der Ansprüche 5 bis 7 und dem Anspruch 8, dadurch gekennzeichnet, daß vorzerkleinertes PTFE-Suspensionspolymerisat mit PTFE-Emulsionspolymerisat im Verhältnis 1 : 5 bis 3 : 1, zusätzlich mit 2,5 bis 25 Masse-% strahlenchemisch modifiziertem PTFE-Rohpolymerisat vom Emulsions- oder Suspensionstyp, mit einem Gleitmittel und einem feinteiligen, herauslösbaren Porenbildner trocken gemischt, auf einem Zweiwalzenstuhl ohne Umorientierung der Walzrichtung auf die gewünschte Enddicke von 0,05 bis 2 mm gewalzt und gesintert und anschließend der Porenbildner herausgelöst wird.

13. Verfahren nach Anspruch 12, dadurch gekennzeichnet, daß die Mischung auf einem Zweiwalzenstuhl mit Walzentemperaturen von 50 bis 200 °C bei einer Friktion von 1,1 bis 1,6 bei einer Verringerung des Walzenspaltes in Schritten von 0,1 bis 0,4 mm auf das Zwei- bis Dreifache der angestrebten Enddicke und anschließend in einem Schritt auf die Enddicke von 0,05 bis 2 mm ausgewalzt wird.

14. Verfahren nach den Ansprüchen 12 oder 13, dadurch gekennzeichnet, daß das Gleitmittel nach dem Walzen entfernt und das Walzfell bei 320 bis 370 °C drucklos gesintert wird.

15. Verfahren nach einem der Ansprüche 12 bis 14, dadurch gekennzeichnet, daß das Gleitmittel ein gesättigter Kohlenwasserstoff oder ein Gemisch von gesättigten Kohlenwasserstoffen mit einem Siedepunkt bzw. einem Siedebereich zwischen 200 bis 300 °C in einem Anteil 10 bis 50 Masse-% (bezogen auf die trockene Mischung) verwendet wird.

## Claims

1. A hydrophiled, microporous membrane comprising polytetrafluoroethylene and a hydrophiling agent, characterized in that the membrane is formed, without graft polymerization, starting with a mixture of unmodified PTFE and 2.5 to 25 mass % (based on the matrix) radiation-chemically modified PTFE as the largely polymer-identical hydrophiling agent and is optionally part of a composite membrane comprising a hydrophobic support membrane and a hydrophiled membrane.

2. The hydrophiled, microporous membrane of claim 1, characterized in that the unmodified PTFE is a suspension polymer.

3. The hydrophiled, microporous membrane of claim 1, characterized in that the unmodified PTFE is an emulsion polymer.

4. The hydrophiled, microporous membrane of claim 1, characterized in that the unmodified PTFE is a mixture of PTFE suspension polymer and PTFE emulsion polymer in a ratio of 10:1 to 1:10.

5. The hydrophiled, microporous membrane of any of claims 1 to 4, characterized in that the radiation-chemically modified PTFE is obtained by radiation of unmodified PTFE, preferably emulsion polymer, by electron radiation with an electron energy of 0.5 to 2 MeV on exposure to air up to an absorbed dose of 2000 to 6000 kGy.

6. The hydrophiled, microporous membrane of claim 5, characterized in that the unmodified PTFE is mixed before radiation with 5 to 40 mass % (based on the PTFE used) ammonium or alkali sulfites, disulfites, hydrogen sulfites, carbonates, hydrocarbonates or bisulfite adducts of carbonyl compounds or a mixture of these substances.

7. The hydrophiled, microporous membrane of claim 6, characterized in that 1 to 12 mass % alkali fluorides (based on the PTFE used) is added.

8. The hydrophiled, microporous membrane of any of claims 1 to 4 and any of claims 5 to 7, characterized in that the micropores arise by extraction of finely divided solid, preferably NaCl, and the porosity is in the range of 10 to 90%.

9. A method for producing the hydrophiled, microporous membrane of any of claims 1 to 4 and any of claims 5 to 7 and claim 8, characterized in that a dry mixture of coarse-crushed PTFE suspension polymer, 2.5 to 25 mass % (based on the PTFE crude polymer) radiation-chemically modified PTFE and a finely divided pore forming material in a ratio of volumes of 1:10 to 5:1 is dispersed with a high-volatile organic liquid with a density of 1.3 to 2.4 g/cm³ at high energy supply and discharged onto a horizontally leveled mold, the organic liquid removed by drying by evaporation and the resulting preformed layer pressed and sintered at 320 to 380°C and a pressure of 1 to 10 MPa and the pore forming material then extracted.

10. The method of claim 9, characterized in that the preformed layer is first cold pressed at the stated pressure, then heated between the press plates at a gap of 0.5 to 5 mm between the upper surface of the preformed layer and the upper press plate, and pressed for 5 to 50 min after the sintering temperature of 320 to 380°C is reached.

11. The method of claims 9 or 10, characterized in that the high-volatile liquid is a halogenated hydrocarbon, in particular dibromotetrafluoroethane.

12. A method for producing the hydrophiled, microporous membrane of any of claims 1 to 4 and any of claims 5 to 7 and claim 8, characterized in that coarse-crushed PTFE suspension polymer is mixed dry with PTFE emulsion polymer in a ratio of 1:5 to 3:1, additionally with 2.5 to 25 mass % radiation-chemically modified PTFE crude polymer of the emulsion or suspension type, with a lubricant and a finely divided, extractable pore forming material, rolled to the desired final thickness of 0.05 to 2 mm on a two-roll mill without reorientation of the direction of rolling, and sintered, and the pore forming material then extracted.

13. The method of claim 12, characterized in that the mixture is rolled out to two to three times the desired final thickness on a two-roll mill with roll temperatures of 50 to 200°C at a friction of 1.1 to 1.6 with a reduction of the roll nip in steps from 0.1 to 0.4 mm, and then to the final thickness of 0.05 to 2 mm in one step.

14. The method of claims 12 or 13, characterized in that the lubricant is removed after rolling and the rolling hide sintered without pressure at 320 to 370°C.

15. The method of any of claims 12 to 14, characterized in that the lubricant is a saturated hydrocarbon or a mixture of saturated hydrocarbons with a boiling point or boiling range between 200 and 300°C used in a proportion of 10 to 50 mass % (based on the dry mixture).

## Revendications

1. Membrane microporeuse hydrophilisée à base de polytétrafluoroéthylène (PTFE) et d'un agent hydrophilisant, caractérisée en ce qu'elle est formée, sans polymérisation greffage, à partir d'un mélange de PTFE non modifié et de 2,5 à 25 % en poids (par rapport à la matrice) de PTFE modifié chimiquement par irradiation, comme agent hydrophilisant pratiquement identique au polymère, et qu'elle est éventuellement un constituant d'une membrane composite comportant une membrane support hydrophobe et une membrane hydrophilisée.

2. Membrane microporeuse hydrophilisée selon la revendication 1, caractérisée en ce que le PTFE non modifié est un produit de polymérisation en suspension.

3. Membrane microporeuse hydrophilisée selon la revendication 1, caractérisée en ce que le PTFE non modifié est un produit de polymérisation en émulsion.

4. Membrane microporeuse hydrophilisée selon la revendication 1, caractérisée en ce que le PTFE non modifié est un mélange de produits de polymérisation en suspension et de polymérisation en émulsion dans le rapport 10:1 à 1:10.

5. Membrane microporeuse hydrophilisée selon une quelconque des revendications 1 à 4, caractérisée en ce que le PTFE modifié chimiquement par irradiation est obtenu par irradiation d'un PTFE non modifié, de préférence un produit de polymérisation en émulsion, par un faisceau d'électrons dont l'énergie est comprise est de 0,5 à 2 MeV dans l'air, jusqu'à l'absorption d'une dose de 2000 à 6000 kGy.

6. Membrane microporeuse hydrophilisée selon la revendication 5, caractérisée en ce que le PTFE non modifié est mélangé, avant irradiation, avec 5 à 40 % en poids (par rapport au PTFE mis en oeuvre) de sulfites, disulfites, hydrogénosulfites, carbonates ou hydrogénocarbonates d'ammonium ou alcalins, ou encore d'adduits bisulfitiques de composés carbonylés ou d'un mélange de ces substances.

7. Membrane microporeuse hydrophilisée selon la revendication 6, caractérisée en ce qu'an lui ajoute 1 à 12 % en poids (par rapport au PTFE introduit) de fluorures alcalins.

8. Membrane microporeuse hydrophilisée sel an une quelconque des revendications 1 à 4 et une quelconque des revendications 5 à 7, caracterisée en ce que les micropores se forment par dissolution de solide finement divisé, de préférence NaCl, et que la porosité est de 10 à 90 %.

9. Procédé de fabrication de la membrane microporeuse hydrophilisée selon une quelconque des revendications 1 à 4 et une quelconque des revendications 5 à 7 et la revendication 8, caractérisé en ce qu'on disperse énergiquement, dans un liquide organique facilement volatil de densité 1,3 à 2,4 g/cm³, un mélange sec de PTFE polymérisé en suspension prébroyé, 2,5 à 25 % en poids (par rapport au PTFE brut) de PTFE modifié chimiquement par irradiation et d'un agent porogène finement divisé, dans un rapport volumique de 1:10 à 5:1, on coule la dispersion obtenue sur un moule disposé horizontalement, on chasse le liquide organique par séchage par évaporation et on comprime la couche préformée résultante à 320-380°C et sous une pression de 1 à 10 MPa, puis on la fritte et on élimine par dissolution l'agent porogène.

10. Procédé selon la revendication 9, caractérisé en ce que la couche préformée est d'abord comprimée à froid sous la pression indiquée, puis chauffée entre les plateaux de pression réglés à un écartement de 0,5 à 5 mm entre face supérieure de la couche préformée et plateau supérieur, puis comprimée pendant 5 à 50 min après avoir atteint la température de frittage de 320 à 380°C.

11. Procédé selon la revendication 9 ou 10, caractérisé en ce que le liquide facilement volatil est un hydrocarbure halogéné, en particulier le dibromotétrafluoroéthane.

12. Procédé de fabrication de la membrane microporeuse hydrophilisée selon une quelconque des revendications 1 à 4 et une quelconque des revendications 5 à 7 et la revendication 8, caractérisé en ce qu'on mélange à sec du PTFE polymérisé en suspension prébroyé et du PTFE polymérisé en émulsion (rapport de mélange 1:5 à 3:1) avec en plus 2,5 à 25 % en poids de PTFE brut, de type polymérisé en suspension ou en émulsion, modifié chimiquement par irradiation, un lubrifiant et un agent porogène solubilisable finement divisé, dans un broyeur à deux cylindres et sans changement d'orientation de la direction de laminage, jusqu'à l'obtention de l'épaisseur finale souhaitée de 0,05 à 2 mm, puis on procède au frittage et on élimine ensuite l'agent porogène par dissolution.

13. Procédé selon la revendication 12, caractérisé en ce qu'on lamine le mélange par passage dans un broyeur à deux cylindres, à des températures de laminage de 50 à 200°C et avec une friction de 1,1 à 1,6 et en réduisant graduellement l'écartement des cylindres par tranches de 0,1 à 0,4 mm, jusqu'à obtenir une épaisseur de deux à trois fois l'épaisseur finale désirée, puis en le réduisant en une seule fois jusqu'à l'épaisseur finale souhaitée de 0,05 à 2 mm.

14. Procédé selon la revendication 12 ou 13, caractérisé en ce que le lubrifiant est éliminé après le laminage et la feuille de calandrage est frittée à 320-370°C sans application de pression.

15. Procédé selon une quelconque des revendications 12 à 14, caractérisé en ce qu'on utilise, comme lubrifiant, un hydrocarbure saturé ou un mélange d'hydrocarbureS saturés, dont le point d'ébullition ou le domaine d'ébullition est compris entre 200 et 300°C, à raison de 10 à 50 % en poids (par rapport au mélange sec).
